# NEUE EUROPÄISCHE PATENTSCHRIFT

(11) **EP 4 264 076 B2**
(45) Veröffentlichungstag und Bekanntmachung des Hinweises auf die Entscheidung über den Einspruch: **11.11.2026**
(45) Hinweis auf die Patenterteilung: 29.05.2024
(21) Anmeldenummer: 22701615.1
(22) Anmeldetag: 25.01.2022
(51) Int. Cl.: F16D 65/04, F16D 65/08, F16D 65/09, F16D 65/092, F16D 65/095, F16D 65/097, F16D 66/00, F16D 66/02

(54) **BELAGNIEDERHALTERANORDNUNG, BREMSSATTELANORDNUNG, SCHEIBENBREMSE UND SCHEIBENBREMSÜBERWACHUNGSSYSTEM**
BRAKE PAD HOLDING ARRANGEMENT, BRAKE CALIPER ARRANGEMENT, DISC BRAKE AND DISC BRAKE MONITORING SYSTEM
AGENCEMENT DE MAINTIEN DE PLAQUETTE DE FREIN, AGENCEMENT D'ÉTRIER DE FREIN, FREIN À DISQUE ET SYSTÈME DE SURVEILLANCE DE FREIN À DISQUE

(30) Priorität: 02.02.2021 DE 102021102324
(43) Veröffentlichungstag der Anmeldung: 25.10.2023
(73) Patentinhaber: SAF-HOLLAND GmbH, 63856 Bessenbach (DE)
(72) Erfinder: AUMÜLLER, Ralf, 60437 Frankfurt (DE)
(74) Vertreter: Müller Schupfner & Partner Patent- und Rechtsanwaltspartnerschaft mbB (Muc)
(86) Internationale Anmeldenummer: PCT/EP2022/051535
(87) Internationale Veröffentlichungsnummer: WO 2022/167255

(56) Entgegenhaltungen:
- EP-A1- 0 337 919
- EP-A1- 2 687 746
- EP-A1- 3 690 272
- WO-A1-2020/038911
- CN-B- 109 073 013
- DE-A1- 102012 106 424
- US-A1- 2018 128 334
- US-A1- 2020 040 956

## Beschreibung

Die Erfindung betrifft eine Belagniederhalteranordnung, eine Bremssattelanordnung, eine Scheibenbremse und ein Scheibenbremsüberwachungssystem.

Die Überwachung des Zustands einer Scheibenbremse ist bereist aus dem Stand der Technik bekannt. Hierfür wird meist in den Bremsbelag ein Sensorelement eingebracht, welches den Verschleißzustand des Bremsbelags erfassen soll bzw. kann. Problematisch bei diesen bereits aus dem Stand der Technik bekannten Systemen zur Überwachung des Zustands der Scheibenbemsanlage ist jedoch, dass bei einem Ausfall des Sensors der gesamte Bremsbelag getauscht werden muss und dass die für solche Systeme benötigten Bremsbeläge sehr teuer sind.

Die EP 3 690 272 A1 als auch die DE 10 2012 106 424 zeigen jeweils eine Halteanordnung für ein Kabel eines Verschleißsensors einer Scheibenbremse.

Es ist daher Aufgabe der vorliegenden Erfindung eine Möglichkeit der Überwachung einer Scheibenbremse zu schaffen, welche kostengünstig ist und keinen hohen Montageaufwand verursacht.

Diese Aufgabe wird mit einer Belagniederhalteranordnung gemäß dem Anspruch 1, mit einer Bremssattelanordnung gemäß dem Anspruch 6, mit einer Scheibenbremse gemäß dem Anspruch 14 und mit einem Scheibenbremsüberwachungssystem gemäß dem Anspruch 15 gelöst. Weitere Vorteile, Merkmale und Ausführungsformen ergeben sich aus den Unteransprüchen, der Beschreibung sowie aus den beigefügten Figuren.

Erfindungsgemäß ist eine Bremsbelagsniederhalteanordnung für eine Bremssattelanordnung. Die Bremsbelagniederhalteranordnung kann insbesondere für eine Nutzfahrzeugbremssattelanordnung ausgelegt sein. Die Bremsbelagniederhalteranordnung umfasst insbesondere ein Halteelement und ein Sensorelement. Das Halteelement erstreckt sich vorteilhafterweise in eine Längsrichtung, wobei das Sensorelement unmittelbar an dem Halteelement festgelegt ist, und das Sensorelement ein Termperaturmesssensor ist. Die erfindungsgemäße Bremsbelagniederhalteranordnung dient dabei dazu, in einer Bremssattelanordnung derart angeordnet zu sein, so dass ein Satz von Bremsbelägen durch die Bremsbelagniederhalteranordnung in ihrer endgültigen Einbauposition fixiert werden. Eine derartige Bremssattelanordnung dient dabei dazu, Bremsbeläge aufnehmen zu können, welche jeweils seitlich von einer Bremsscheibe angeordnet werden kann, so dass die Bremsscheibe durch diese Bremsbeläge gebremst werden können. Vorteilhafterweise ist die Bremsbelagniederhalteranordnung derart ausgelegt, dass diese in einer Nutzfahrzeugbremssattelanordnung verwendbar ist. Ein Nutzfahrzeug im Sinne der Erfindung ist insbesondere ein straßentaugliches Fahrzeug mit einem zulässigen Gesamtgewicht von mehr als 3,5 t, bevorzugt von mehr als 7,5 t und besonders stark bevorzugt von mehr als 15 t. Daher unterscheidet sich eine Nutzfahrzeugbremssattelanordnung grundlegend in ihrer Dimensionierung von einer Kraftfahrzeugbremssattelanordnung. Die erfindungsgemäße Bremsbelagniederhalteranordnung umfasst zumindest ein Halteelement und ein Sensorelement. Das Halteelement der Bremsbelagniederhalteranordnung dient dabei dazu, formschlüssig einen Bremsbelag direkt oder indirekt niederzuhalten bzw. formschlüssig gegen ein Austreten aus einem Bremssattel zu sichern. Das Halteelement erstreckt sich dabei in eine Längsrichtung. Diese Längsrichtung des Halteelements ist vorteilhafterweise diejenige Richtung, in welche das Halteelement seine größte Längsdimension aufweist und/oder in welche das Halteelement seine größte Hauptabmessung aufweist, In anderen Worten kann daher die Längsrichtung diejenige Richtung sein, in welche sich die Länge des Halteelements bemisst. Alternativ oder zusätzlich bevorzugt kann die Längsrichtung auch parallel zu der Rotationsachse der zu bremsenden Achse ausgerichtet sein, insbesondere in einem montierten Zustand in einem Bremssattel. Neben dem Halteelement weist die Bremsbelagniederhalteranordnung auch ein Sensorelement auf, vorteilhafterweise eine Vielzahl von Sensorelementen auf, wobei das als Temperaturmesssensor ausgelegte Sensorelement unmittelbar an dem Halteelement festgelegt ist. Das Sensorelement dient dazu, einen Messwert zu erfassen. Beispielsweise kann dieser Messwert eine Schwingung und/oder eine Kraft sein. Vorteilhafterweise arbeitet das Sensorelement oder alle Sensorelemente berührungslos. Hierdurch kann in besonders verschleißarmer Weise ein Messwert durch das Sensorelement ermittelt werden. Alternativ oder zusätzlich bevorzugt kann zumindest eines der Sensorelemente auch ein kontaktierendes Messprinzip verwenden. Unter einem Festlegen ist zu verstehen, dass das Sensorelement ortsfest, an dem Halteelement befestigt ist. Daher kann das Sensorelement, insbesondere ausschließlich, durch das Halteelement gehalten sein. Durch die Anordnung des Sensorelements am Halteelement bzw. durch die Festlegung des Sensorelements am Halteelement kann eine besonders bauraumsparende und kompakte Bremsbelagniederhalteranordnung erreicht werden, welche darüber hinaus auch besonders kostengünstig ist und einen Austausch des Sensors in einfacher Weise ermöglicht. Zweckmäßigerweise kann dieses Sensorelement dabei über einen Kabelbinder oder ein Klammerelementen an dem Halteelement festgelegt sein. Alternativ oder zusätzlich bevorzugt kann diese Festlegung auch durch reversible Befestigungsmittel, wie beispielsweise Schrauben oder Bolzen oder ähnliche Mittel, erfolgen. Hierdurch kann eine besonders einfache Demontage sichergestellt werden. Sollte eine besonders langlebige Festlegung erreicht werden, so können irreversible Festlegungsmittel, wie beispielsweise Nieten, Kleben oder Schweißen, verwendet werden.

In einer bevorzugten Ausführungsform weist das Halteelement einen Primärhaltebereich und einen Sekundärhaltebereich auf, wobei der Primärhaltebereich und der Sekundärhaltebereich dazu ausgelegt sind, das Halteelement gegenüber einem Bremssattel oder einer Bremssattelanordnung abzustützen, und wobei das Sensorelement, insbesondere in Längsrichtung, zwischen dem Primärhaltebereich und dem Sekundärhaltebereich angeordnet ist. Der Primärhaltebereich und der Sekundärhaltebereich dienen daher dazu, das Halteelement gegenüber einem Bremssattel oder einer Bremssattelanordnung abzustützen. Zweckmäßigerweise können der Primärhaltebereich und/oder der Sekundärhaltebereich distale Enden des Halteelements, insbesondere in Längsrichtung gesehen, ausbilden. Hierdurch kann eine besonders einfache Montage erreicht werden. Der Primärhaltebereich ist dabei insbesondere derjenige Bereich des Halteelements bzw. derjenige Haltebereich (primär bzw. sekundär Haltebereiche) des Halteelements, welcher einem möglichen Bremszylinder einer Bremssattelanordnung zugewandt ist. Der Sekundärhaltebereich des Halteelements hingegen kann insbesondere derjenige Bereich sein, welcher ein distales Ende gegenüberliegend vom Bremszylinder, insbesondere in Längsrichtung, ausbildet. Der Primärhaltebereich und/oder der Sekundärhaltebereich, welche auch als primär bzw. sekundär Haltebereiche bezeichnet werden können, kann bzw. können in eine Öffnung eines Bremssattels einführbar sein, welche sich vorteilhafterweise entlang oder zumindest im Wesentlichen parallel zur Längsrichtung erstreckt. Alternativ oder zusätzlich bevorzugt können der Primärhaltebereich und/oder der Sekundärhaltebereich auch über Bolzenverbindungen und/oder über Klemmeinsätze mit einem Bremssattel oder einer Bremssattelanordnung verbunden sein bzw. an diesen festgelegt sein. Zweckmäßigerweise ist das Sensorelement, insbesondere in Längsrichtung, zwischen dem Primärhaltebereich und dem Sekundärhaltebereich angeordnet. Hierdurch kann eine besonders effektive Messanordnung erreicht werden, denn durch die Anordnung des Sensorelements, insbesondere in Längsrichtung, zwischen dem Primärhaltebereich und dem Sekundärhaltebereich kann das Sensorelement besonders nah an einer Bremsscheibe oder an einem Bremsbelag angeordnet werden. Darüber hinaus kann hierdurch auch eine besonders bauraumsparende und wartungsarme Anordnung bzw. Festlegung des Sensorelements an dem Halteelement erreicht werden, denn durch diese Anordnung kann die Zugänglichkeit des Sensorelements gesteigert werden.

Zweckmäßigerweise ist das Halteelement ein Belagniederhaltebügel. Ein Belagniederhaltebügel dient insbesondere dazu, Bremsbeläge in einer Bremssattelanordnung niederzuhalten bzw. deren Austreten gegenüber dem Bremssattel zu verhindern. Der Belagniederhaltebügel erstreckt sich vorteilhafterweise parallel zu der zu bremsenden Rotationsachse. Zweckmäßigerweise ist der Belagniederhaltebügel dabei eine Blech- und/oder eine Gusskonstruktion. Hierdurch kann eine besonders belastbare Konstruktion eines Halteelements erreicht werden.

Erfindungsgemäß ist zumindest eines der Sensorelemente, bevorzugt alle Sensorelemente, ein berührungsloser Sensor. Durch das Vorsehen eines Temperaturmesssensors kann in einfacher Weise Rückschluss auf die Bremssituation einer zu bremsenden Achse gezogen werden. Beispielsweise kann hierdurch eine Überbelastung und/oder eine Fehlfunktion der Bremse detektiert werden.

Durch das Vorsehen eines berührungslosen Sensors kann eine besonders verschleißarme Sensorausbildung erreicht werden. Ein derartiger berührungsloser Sensor kann beispielsweise Gebrauch von der imitierten Wärmestrahlung eines Bremsbelags, einer Bremsscheibe und/oder eines Bremssattels machen. Unter einem berührungslosen Sensor ist dabei insbesondere zu verstehen, dass das Sensorelement mit den Elementen, deren Messwerte erfasst werden sollen, nicht kontaktiert oder diese berührt, um einen Messwert zu erfassen.

Vorteilhafterweise ist das Sensorelement mit einer Kabelanordnung verbunden, wobei die Kabelanordnung insbesondere an dem Halteelement befestigt ist, vorzugsweise mittels Klammern oder Kabelbindern. Durch die Verwendung einer Kabelanordnung kann in einfacher und sicherer Weise eine Energieversorgung eines Sensorelements und eine sichere Übertragung der erfassten Messwerte erreicht werden. Dies ist insbesondere im Bereich von Nutzfahrzeugbremsen, welche einen hohen metallischen Anteil zum sicheren Abstützen bzw. zur sicheren Aufnahme von Bremsmomenten und Bremskräften aufweisen, entscheiden, denn hierdurch kann insbesondere die bei einer drahtlos stattfindenden Messwertübertragung auftretende Störung reduziert werden. Vorteilhafterweise ist die Kabelanordnung an dem Halteelement befestigt. In anderen Worten kann das Halteelement nicht nur zur Abstützung des Sensorelements eingesetzt werden, sondern zusätzlich kann die Halteanordnung auch zur Abstützung bzw. zur Führung der Kabelanordnung verwendet werden, so dass hierdurch eine besonders bauraumsparende und multifunktionale Bremsbelagniederhalteranordnung erreicht werden kann. Diese Festlegung der Kabelanordnung kann beispielsweise unter Ausnutzung von Klammern oder Kabelbindern erfolgen. Hierdurch kann in besonders einfacher und kostengünstiger Weise eine Fixierung bzw. Festlegung der Kabelanordnung an dem Halteelement erreicht werden.

Ein weiterer Aspekt der Erfindung kann eine Bremssattelanordnung betreffen, wobei die Bremssattelanordnung einen Bremssattel und eine Bremsbelagniederhalteranordnung, insbesondere eine Bremsbelagniederhalteranordnung wie vorgehend und nachfolgend beschrieben, umfasst. Durch die Verwendung einer Bremsbelagniederhalteranordnung in einem Bremssattel können die vorgehend und nachfolgend beschriebenen Vorteile und Merkmale und Ausführungsformen einer Bremsbelagniederhalteranordnung, insbesondere in einer Nutzfahrzeugbremssattelanordnung, erreicht bzw. vorgesehen werden. Eine Bremssattelanordnung dient insbesondere dazu, in einer Scheibenbremse verwendet zu werden, um die in der Scheibenbremse vorhandene Bremsscheibe mittels Bremsbelägen zu bremsen, welche in einer derartigen Bremssattelanordnung montiert werden können.

In einer vorteilhaften Ausführungsform weist der Bremssattel eine Einführöffnung zum Einführen von Bremsbelägen auf, wobei das Halteelement derart am Bremssattel montiert ist oder montierbar ist, insbesondere mittels dessen Primärhaltebereichs und/oder dessen Sekundärhaltebereichs, so dass ein Ein- oder Ausführen von Bremsbelägen aus oder in die Einführöffnung des Bremssattels formschlüssig durch das Halteelement verhindert ist. In anderen Worten kann das Halteelement derart an dem Bremssattel montiert sein, so dass formschlüssig ein Einführen und ein Ausführen von Bremsbelägen aus der hierfür vorgesehenen Einführöffnung des Bremssattels durch formschlüssigen unmittelbaren oder mittelbaren Kontakt zwischen den Bremsbelägen und dem Halteelement verhindert ist. Die Einführöffnung des Bremssattels ist insbesondere dazu ausgelegt, dass in einem demontierten Zustand des Halteelements ein Einführen von Bremsbelägen in den Bremssattel derart möglich ist, dass die Bremsbeläge ihre endgültige Position einnehmen können, wobei hierfür der Bremssattel in Relation zur zu bremsenden Achse bzw. zur Rotationsachse der Bremsscheibe nicht verlagert und/oder demontiert werden muss. Dies kann insbesondere z.B. durch eine Einführöffnung erreicht werden, welche sich senkrecht zur Längsrichtung und/oder zu der zu bremsenden Achse bzw. zur Rotationsachse der Bremsscheibe erstreckt. Die endgültige Position der Bremsbeläge ist dabei diejenige Position, welche diese in einem montierten Zustand aufweisen, wobei in einem montierten Zustand die Bremsbeläge, insbesondere durch Bremskolben, derart verlagerbar in dem Bremssattel gehalten sind, so dass diese mit einer Bremsscheibe kontaktieren können, um so ein Reibmoment bzw. Bremsmoment zu erzielen. Sollte das Halteelement jedoch am Bremssattel montiert sein, so ist in diesem montieren Zustand formschlüssig ein Ein- und Austreten von Bremsbelägen in oder aus der Einführöffnung durch das Halteelement verhindert. Vorteilhafterweise überspannt daher das Halteelement die Einführöffnung. Zweckmäßigerweise ist daher in einem montierten Zustand der Primärhaltebereich auf der einen Seite der Einführöffnung am Bremssattel festgelegt und der Sekundärhaltebereich des Halteelements auf der gegenüberliegenden Seite der Einführöffnung, insbesondere in Längsrichtung gesehen, festgelegt. Hierdurch kann in besonders einfacher Weise ein formschlüssiges Austreten von Bremsbelägen aus der Einführöffnung verhindert werden.

Vorteilhafterweise weist die Bremssattelanordnung zumindest zwei Bremsbeläge auf. Hierdurch kann in besonders einfacher Weise eine Bremsmöglichkeit geschaffen werden. Bremsbeläge im Sinne der Erfindung sind dabei insbesondere diejenigen Bremsbeläge, welche dazu ausgelegt sind, mit einer Bremsscheibe zu kontaktieren bzw. ein Reibmoment auszubilden. Daher weisen die Bremsbeläge insbesondere eine Reibfläche auf, welche zweckmäßigerweise in einer Ebene liegt. Die Normale dieser Ebene ist vorteilhafterweise zumindest im Wesentlichen parallel zur Längsrichtung des Halteelements und/oder zu der Rotationsachse der zu bremsenden Bremsscheibe orientiert. Unter einem im Wesentlichen parallel ist dabei zu verstehen, dass der kleinere zwischen den beiden Richtungen eingeschlossene Winkel maximal 10°, bevorzugt maximal 5°, besonders bevorzugt maximal 2° und besonders stark bevorzugt maximal 1° aufweisen darf. Ganz besonders bevorzugt ist es jedoch, wenn die Richtungen nicht nur im Wesentlichen parallel sondern exakt parallel zueinander ausgebildet sind. Hierdurch kann eine besonders kompakte und bauraumsparende Bremssattelanordnung erreicht werden.

Zweckmäßigerweise ist das Sensorelement auf der den Bremsbelägen zugewandten Seite des Halteelements angeordnet. In anderen Worten kann das Sensorelement derart am Halteelement angeordnet bzw. festgelegt sein, so dass diese zwischen dem Halteelement und den Bremsbelägen angeordnet ist. Unter zugewandt ist dabei zu verstehen, dass diejenige Seite des Halteelements, an welcher das Sensorelement angeordnet ist, einen Normalenanteil aufweist, welcher zumindest in Richtung der Bremsbeläge orientiert ist. Die Anordnung erfolgt dabei insbesondere derart, dass das Halteelement das Sensorelement lagert, bzw. gegen die Gravitation abstützt. Vorteilhafterweise ist dabei das Sensorelement durch ein Lagerelement, insbesondere einem Kabelbinder oder einer Schelle, am Halteelement gelagert. Vorteilhafterweise kontaktiert das Sensorelement das Halteelement, um so eine besonders sichere und kompakte Anordnung zu erreichen.

In einer vorteilhaften Ausführungsform weist die Bremssattelanordnung einen Verschleißsensor auf, wobei der Verschleißsensor einen Verschleißzustand der Bremsbeläge misst oder erfassen kann. Ein derartiger Verschleißsensor kann beispielsweise in den Bremsbelägen eingebaut sein, wobei vorteilhafterweise der Verschleißsensor durch ein abrasives Sensorprinzip den Verschleißzustand des Bremsbelags bzw. der Bremsbeläge messtechnisch erfasst. Unter einem abrasiven Messprinzip im Sinne der Erfindung ist dabei zu verstehen, dass insbesondere ein innerer Widerstand des Verschleißsensors sich aufgrund eines Materialabtrags der Bremsbeläge und/oder des Verschleißsensors verändert. Beispielsweise kann dies dadurch erreicht werden, dass durch den Reibkontakt zwischen der Bremsscheibe und den Bremsbelägen mit zunehmendem Verschleiß Kontakte des Verschleißsensors durchtrennt werden. Hierdurch kann in besonders messtechnisch zuverlässiger Weise Rückschluss auf den Verschleißzustand des Bremsbelags gezogen werden. Durch das Vorsehen eines Verschleißsensors kann in effektiver Weise eine umfassende Überwachung nicht nur mittels des Sensorelements am Halteelement, sondern durch weitere Sensoren der Bremssattel-anordnung erreicht werden, so dass eine zuverlässige Zustandsbestimmung der Bremssattelanordnung bzw. der Bremsbeläge erfolgen kann.

Vorteilhafterweise ist der Verschleißsensor mittel- oder unmittelbar am Bremsbelag angeordnet. Unter angeordnet kann in diesem Zusammenhang nicht nur verstanden werden, dass der Verschleißsensor an dem Bremsbelag montiert ist, sondern zusätzlich oder alternativ bevorzugt kann hierunter auch verstanden werden, dass der Verschleißsensor in dem Reibmaterial des Bremsbelags inkludiert ist oder von diesem zumindest teilweise umschlossen ist. Hierdurch kann eine besonders bauraumsparende Anordnung des Verschleißsensors erreicht werden, so dass wertvoller Bauraum gespart werden kann.

Zweckmäßigerweise ist der Verschleißsensor mit einem Kabel verbunden, wobei das Kabel an dem Halteelement befestigt sein kann. In anderen Worten kann der Verschleißsensor kabelgebunden mit Energie versorgt werden und/oder kabelgebunden seine Messwerte - beispielsweise an eine Auswerteinheit - übertragen. Um besonders bauraumsparend das Kabel des Verschleißsensors zu halten, ist dieses vorteilhafterweise an dem Halteelement, beispielsweise durch Klammern oder durch Kabelbinder, befestigt. Das Kabel ist dabei vorzugsweise an der den Bremsbelägen zugewandten Seite des Halteelements angeordnet, besonders bevorzugt zumindest abschnittsweise oder vollständig in einem Bereich zwischen dem Primärhaltebereich und dem Sekundärhaltebereich. Hierdurch kann das Kabel gegen äußere Beschädigungen besonders gut geschützt werden. Alternativ oder zusätzlich bevorzugt ist das Kabel an der den Bremsbelägen abgewandten Seite des Halteelements angeordnet, besonders bevorzugt zumindest abschnittsweise oder vollständig in einem Bereich zwischen dem Primärhaltebereich und dem Sekundärhaltebereich. Hierdurch kann eine besonders gute Abschirmung gegenüber hohen Temperaturen erreicht werden.

Zweckmäßigerweise ist das Kabel ein Teil der Kabelanordnung. Hierdurch kann ebenfalls wertvoller Bauraum gespart werden und darüber hinaus kann hierdurch auch eine Einsparung von Befestigungsmitteln erreicht werden.

Vorteilhafterweise ist das Sensorelement ein Bremsbelagstemperaturmesselement und/oder ein Bremsscheibentemperaturmesselement. Unter einem Bremsbelagstemperaturmesselement ist insbesondere zu verstehen, dass das Sensorelement in einem eingebauten Zustand in der Lage ist, insbesondere direkt, eine Temperatur des Bremsbelags zu erfassen. Hierdurch kann in besonders effektiver Weise durch das Sensorelement bestimmt werden, ob der messtechnisch überwachte Bremsbelag eine ausreichende Dissipationsenergie leistet und/oder ggf. thermisch überstrapaziert bzw. überbelastet ist. Alternativ oder zusätzlich bevorzugt kann das Sensorelement auch ein Bremsscheibentemperaturmesselement sein. In anderen Worten kann daher das Sensorelement auch dazu dienen, eine Bremsscheibentemperatur messtechnisch zu erfassen. Hierdurch kann in besonders einfacher Weise und in besonders schneller Weise Rückschluss auf die Gesamtdissipationsenergie in einer Scheibenbremse gezogen werden. Diese gewonnenen Informationen können dabei in ein Warnsystem und/oder in ein Verschleißinformationssystem eines Fahrzeugs einfließen und/oder an dieses übertragen werden.

Ein weiterer Aspekt der Erfindung kann eine Scheibenbremse betreffen, welche eine Bremsscheibe aufweist und eine, insbesondere wie vorgehend und nachfolgend beschriebene, Bremssattelanordnung. Hierdurch können in besonders effektiver Weise die vorgenannten und nachfolgend beschriebenen Vorteile, Merkmale und Ausführungsformen in einer Bremsscheibe realisiert werden.

Vorteilhafterweise ist die Scheibenbremse eine Nutzfahrzeugscheibenbremse. In anderen Worten kann die Scheibenbremse dazu ausgelegt und dazu bestimmt sein, in einem Nutzfahrzeug Anwendung zu finden. Eine derartige Nutzfahrzeugscheibenbremse ist daher in der Lage, ein erfindungsgemäßes Nutzfahrzeug zu bremsen. Besonders bevorzugt kann das Nutzfahrzeug dabei ein Anhänger bzw. ein Sattelauflieger sein.

Ein weiterer Aspekt der Erfindung kann ein Scheibenbremsüberwachungssystem betreffen. Dieses Scheibenbremsüberwachungssystem umfasst insbesondere eine Scheibenbremse wie vorgehend und nachfolgend beschrieben und/oder eine Auswerteinheit, wobei die Auswerteinheit dazu ausgelegt ist, eine Warnung auszugeben und/oder anzuzeigen, wenn die Temperatur der Bremsscheibe und/oder eines Bremsbelags unterhalb einer erwarteten und/oder oberhalb einer erwarteten Temperatur liegt. Die erwartete Temperatur kann dabei insbesondere durch ein Modell und/oder unter Verwendung eines neuronalen Netzwerks bestimmt werden. Hierzu werden insbesondere Lerndaten verwendet, welche von bzw. an einer baugleichen ordnungsgemäßen Scheibenbremse bestimmt werden. Zweckmäßigerweise werden diese Lerndaten dabei während einem Minimallast-, einem Normallast- und einem Maximallastzustands ermittelt. Die Auswerteinheit des Scheibenbremsüberwachungssystems ist insbesondere informationstechnisch mit dem Sensorelement bzw. allen Sensorelementen und/oder mit dem Verschleißsensor verbunden, so dass die in diesen Sensoreinheiten ermittelten Messwerte der Auswerteinheit zugeführt werden oder zugeführt werden können. Durch einen Vergleich der tatsächlich vorliegenden Sensorwerte mit den erwarteten Sensorwerten ist die Auswerteinheit in der Lage, einen Vergleich des Ist-Zustandes mit einem erwarteten Soll-Zustand zu erreichen. Sollte hierbei eine Abweichung vorliegen, welche insbesondere einen festgelegten Schwellenwert überschreitet, so kann die Auswerteinheit eine Warnung ausgeben und/oder anzeigen. Hierzu kann die Auswerteinheit einen Informationsausgang, beispielsweise im Rahmen eines Informationsdisplay, und/oder über eine informationstechnische Verbindung mit einem Nutzfahrzeug verfügen. Hierdurch kann in besonders effektiver Weise eine Überwachung einer Scheibenbremse erreicht werden, so dass frühzeitig mögliche Überlastungszustände erkannt werden und einem Fahrer mitgeteilt werden können. Darüber hinaus kann durch das erfindungsgemäße Scheibenbremsüberwachungssystem auch erreicht werden, dass ein Benutzer beispielsweise darauf aufmerksam gemacht wird, dass der Einsatz zusätzlicher Bremssysteme, wie beispielsweise elektrischer Bremssysteme zur Rekuperation und/oder Retarder, insbesondere des Nutzfahrzeugs, vermehrt Einsatz finden sollten, um eine Überbelastung des Scheibenbremssystems zu verhindern.

Weitere Vorteile und Merkmale der vorliegenden Erfindung ergeben sich aus der nachfolgenden Beschreibung mit Bezug auf die Figuren. Einzelne Merkmale der dargestellten Ausführungsform können dabei auch in anderen Ausführungsformen eingesetzt werden, sofern dies nicht ausdrücklich ausgeschlossen wurde. Es zeigen:
- Figur 1: eine Scheibenbremse;
- Figur 2: einen Schnitt durch ein Halteelement, und
- Figur 3: eine perspektivische Ansicht einer Bremssattelanordnung.

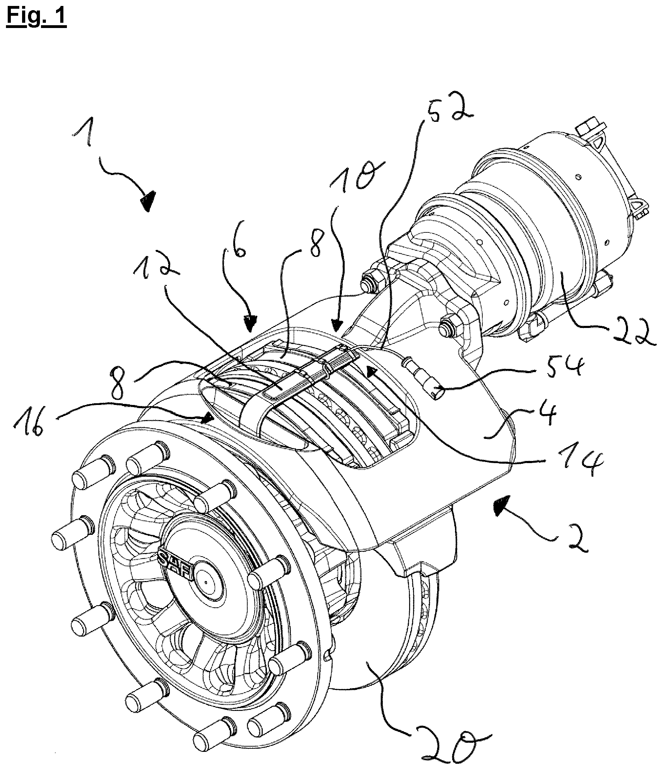

In der **Figur 1** ist eine Scheibenbremse 1 gezeigt. Die Scheibenbremse 1 verfügt über eine Bremsscheibe 20, welche um eine zu bremsende Rotationsachse rotierbar gelagert ist. Um diese Bremsscheibe 20 zu bremsen, sind in dem Bremssattel 4 der Bremssattelanordnung 2 der Scheibenbremse 1 Bremsbeläge 8 angeordnet. Die Bremsbeläge 8 sind durch die Einführöffnung 6 des Bremssattels 4 in den Bremssattel 4 einführbar. Um ein Austreten der Bremsbeläge 8 aus der Einführöffnung 6 formschlüssig zu verhindern, verfügt die Bremssattelanordnung 2 über ein Halteelement 12, welches die Einführöffnung 6 in Längsrichtung L überspannt. Die Längsrichtung L ist in der Figur 1 nicht eingezeichnet, wobei diese jedoch parallel zur Rotationsachse der Bremsscheibe 20 orientiert ist. Das Halteelement 12 ist über dessen Sekundärhaltebereich 16 und über dessen Primärhaltebereich 14 mit dem Bremssattel 4 verbunden. Der Primärhaltebereich 14 und der Sekundärhaltebereich 16 bilden dabei distale Enden des Halteelements 12 entlang der Längsrichtung L aus. Das Halteelement 12 und ein in der Figur 1 nicht erkennbares Sensorelement 50 bilden dabei eine Bremsbelagniederhalteranordnung 10 aus. Das Sensorelement 50 ist dabei in der Figur 1 derart angeordnet, dass dieses an dem Halteelement 12 auf der den Bremsbelägen 8 zugewandten Seite angeordnet ist, so dass dieses in der Figur 1 nicht zu erkennen ist. Das Halteelement 12 ist in der dargestellten Situation ein Belagniederhaltebügel. Um das Sensorelement 50 mit Energie zu versorgen, ist dieses mit einer Kabelanordnung 52 verbunden, welches mit einem Kabelstecker 54 ausgestattet bzw. verbunden ist. Die Kabelanordnung 52 ist über Kabelbinder an dem Halteelement 12 festgelegt. Um die Bremsbeläge 8 mit der Bremsscheibe 20 in Reibkontakt zu bringen, verfügt die Scheibenbremse 1 über einen Bremszylinder 22.

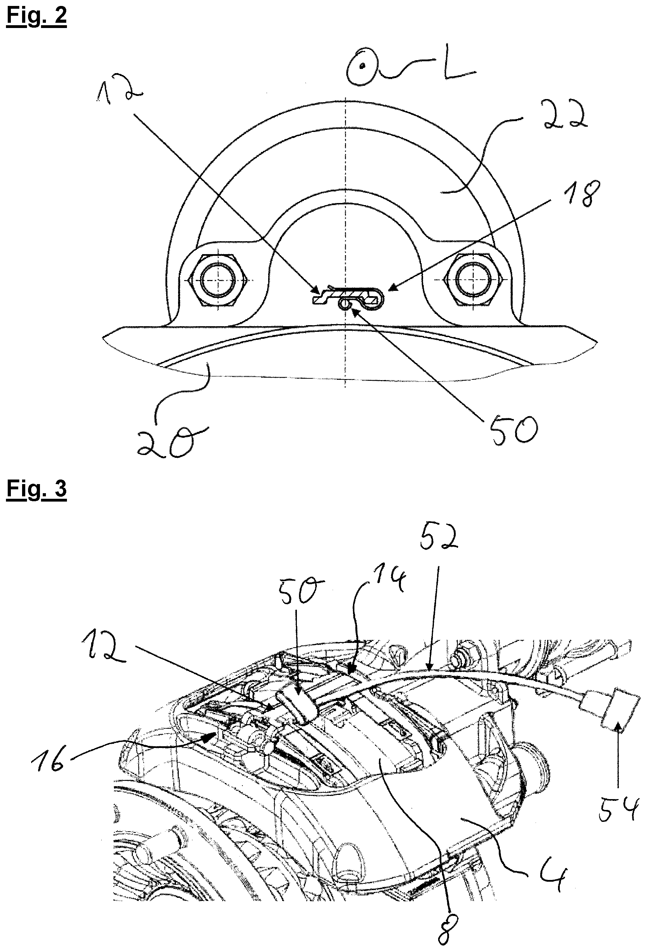

In der **Figur 2** ist ein Schnitt durch eine Scheibenbremse 1 gezeigt. Die Schnittebene verläuft dabei senkrecht zur Längsrichtung L. In der Figur 2 ist die Schnittebene derart angeordnet, dass diese einer Reibebene der Bremsscheibe 20 entspricht. Das Halteelement 12 erstreckt sich entlang der Längsrichtung L, wobei über eine Klammer 18 ein Sensorelement 50 am Halteelement 12 festgelegt ist. Das Sensorelement 50 ist dabei auf der den Bremsbelägen 8 bzw. der Bremsscheibe 20 zugewandten Seite des Halteelements 12 angeordnet.

In der **Figur 3** ist eine weitere prinzipielle Ansicht einer Scheibenbremse 1 gezeigt. Die Scheibenbremse 1 verfügt über einen Bremssattel 4, in welchem ein Halteelement 12 angeordnet ist, wobei der Primärhaltebereich 14 in einer Öffnung des Bremssattels 4 aufgenommen ist, welche sich in Längsrichtung L erstreckt. Der Sekundärhaltebereich 16 des Halteelements 12 hingegen ist über eine Bolzenverbindung bzw. eine Fixiervorrichtung an dem Bremssattel 4 festgelegt. In Längsrichtung L zwischen dem Primärbereich 14 und dem Sekundärbereich 16 ist ein Sensorelement 50 am Halteelement 12 festgelegt, wobei das Sensorelement 50 mit einer Kabelanordnung 52 verbunden ist. Das Sensorelement 50 ist ein Temperaturmesssensor, welcher berührungslos arbeitet. Das Sensorelement 50 ist derart ausgelegt, dass dieses die Temperatur der Bremsbeläge 8 erfassen kann, so dass das Sensorelement 50 ein Bremsbelagtemperaturmesselement ist. Zusätzlich kann das Sensorelement 50 auch die Bremsscheibentemperatur messtechnisch erfassen, so dass das Sensorelement 50 auch ein Bremsscheibentemperaturmesselement ist.

### Bezugszeichenliste:

- 1: - Scheibenbremse
- 2: - Bremssattelanordnung
- 4: - Bremssattel
- 6: - Einführöffnung
- 8: - Bremsbelag
- 10: - Bremsbelagniederhalteranordnung
- 12: - Halteelement
- 14: - Primärhaltebereich
- 16: - Sekundärhaltebereich
- 18: - Klammer
- 20: - Bremsscheibe
- 22: - Bremszylinder
- 50: - Sensorelement
- 52: - Kabelanordnung
- 54: - Kabelstecker
- L: - Längsrichtung

## Patentansprüche

1. Bremsbelagniederhalteranordnung (10) für eine Bremssattelanordnung (2), insbesondere für eine Nutzfahrzeugbremssattelanordnung, umfassend ein Halteelement (12) und ein Sensorelement (50),
wobei das Halteelement (12) sich in eine Längsrichtung (L) erstreckt und dazu ausgelegt ist, formschlüssig einen Bremsbelag (8) direkt oder indirekt niederzuhalten und formschlüssig gegen ein Austreten aus einem Bremssattel (4) zu sichern,
wobei das Sensorelement (50) unmittelbar an dem Halteelement (12) festgelegt ist,
**dadurch gekennzeichnet, dass** das Sensorelement (50) ein Temperaturmesssensor ist.

2. Bremsbelagniederhalteranordnung (10) nach Anspruch 1,
wobei das Halteelement (12) einen Primärhaltebereich (14) und einen Sekundärhaltebereich (16) aufweist,
wobei der Primärhaltebereich (14) und der Sekundarhaltebereich (16) dazu ausgelegt sind, das Halteelement (12) gegenüber einem Bremssattel (4) oder einer Bremssattelanordnung (2) abzustützen, und
wobei das Sensorelement (50), insbesondere in Längsrichtung (L), zwischen dem Primärhaltebereich (14) und dem Sekundarhaltebereich (16) angeordnet ist.

3. Bremsbelagniederhalteranordnung (10) nach einem der vorhergehenden Ansprüche,
wobei das Halteelement (12) ein Belagniederhaltebügel ist.

4. Bremsbelagniederhalteranordnung (10) nach einem der vorhergehenden Ansprüche,
wobei das Sensorelement (50) ein berührungsloser Sensor ist.

5. Bremsbelagniederhalteranordnung (10) nach einem der vorhergehenden Ansprüche,
wobei das Sensorelement (50) mit einer Kabelanordnung (52) verbunden ist,
wobei die Kabelanordnung (52) insbesondere an dem Halteelement (12) befestigt ist, vorzugsweise mittels Klammern.

6. Bremssattelanordnung (2) umfassend einen Bremssattel (4) und eine Bremsbelagniederhalteranordnung (10) nach einem der vorhergehenden Ansprüche.

7. Bremssattelanordnung (2) gemäß Anspruch 6,
wobei der Bremssattel (4) eine Einführöffnung (6) zum Einführen von Bremsbelägen (8) aufweist,
wobei das Halteelement (12) derart am Bremssattel (4) montiert ist oder montierbar ist, insbesondere mittels dessen Primärhaltebereich (14) und dessen Sekundarhaltebereich (16), sodass ein Ein- oder Ausführen von Bremsbelägen (8) aus oder in die Einführöffnung (6) des Bremssattels (4) formschlüssig durch das Halteelement (12) verhindert ist.

8. Bremssattelanordnung (2) gemäß Anspruch 6 oder 7,
wobei die Bremssattelanordnung (2) zwei Bremsbeläge (8) umfasst.

9. Bremssattelanordnung (2) gemäß Anspruch 8,
wobei das Sensorelement (50) auf der den Bremsbelägen (8) zugewandten Seite des Halteelements (12) angeordnet ist.

10. Bremssattelanordnung (2) gemäß Anspruch 8 oder 9,
wobei die Bremssattelanordnung (2) einen Verschleißsensor aufweist,
wobei der Verschleißsensor einen Verschleißzustand der Bremsbeläge (8) misst oder erfassen kann.

11. Bremssattelanordnung (2) gemäß Anspruch 10,
wobei der Verschleißsensor mittel oder unmittelbar am Bremsbelag (8) angeordnet ist.

12. Bremssattelanordnung (2) gemäß Anspruch 10 oder 11,
wobei der Verschleißsensor mit einem Kabel verbunden ist,
wobei das Kabel an dem Halteelement (12) befestigt ist.

13. Bremssattelanordnung (2) gemäß einem der Ansprüche 6 bis 12,
wobei das Sensorelement (50) ein Bremsbelagstemperaturmesselement und/oder ein Bremsscheibentemperaturmesselement ist.

14. Scheibenbremse (1) umfassend einen Bremssattelanordnung (2) gemäß einem der Ansprüche 6 bis 13 und eine Bremsscheibe (20).

15. Scheibenbremsüberwachungssystem umfassend eine Scheibenbremse gemäß Anspruch 14 und eine Auswerteinheit,
wobei die Auswerteinheit eine Warnung ausgibt und/oder anzeigt,
wenn die Temperatur der Bremsscheibe und/oder der Bremsbeläge unterhalb einer erwarteten und/oder oberhalb von einer erwarteten Temperatur liegt.

## Claims

1. Brake pad retaining arrangement (10) for a brake caliper arrangement (2), in particular for a commercial vehicle brake caliper arrangement, comprising a retaining element (12) and a sensor element (50),
wherein the retaining element (12) extends in a longitudinal direction (L), and is designed to hold a brake pad (8) in place by positive engagement, either directly or indirectly, and to secure it against slipping out of a brake caliper (4) by positive engagement
wherein the sensor element (50) is fixed directly to the retaining element (12),
**characterized in that** the sensor element (50) is a temperature measuring sensor.

2. Brake pad retaining arrangement (10) according to claim 1,
wherein the retaining element (12) has a primary retaining region (14) and a secondary retaining region (16),
wherein the primary retaining region (14) and the secondary retaining region (16) are designed to support the retaining element (12) relative to a brake caliper (4) or a brake caliper arrangement (2), and
wherein the sensor element (50) is arranged, in particular in the longitudinal direction (L), between the primary retaining region (14) and the secondary retaining region (16).

3. Brake pad retaining arrangement (10) according to any one of the preceding claims, wherein the retaining element (12) is a brake pad retaining bracket.

4. Brake pad retaining arrangement (10) according to any one of the preceding claims, wherein the sensor element (50) is a non-contact sensor.

5. Brake pad retaining arrangement (10) according to any one of the preceding claims, wherein the sensor element (50) is connected to a cable arrangement (52), wherein the cable arrangement (52) is in particular fixed to the retaining element (12), preferably by means of clamps.

6. Brake caliper arrangement (2) comprising a brake caliper (4) and a brake pad retaining arrangement (10) according to any one of the preceding claims.

7. Brake caliper arrangement (2) according to claim 6,
wherein the brake caliper (4) has an insertion opening (6) for the insertion of brake pads (8),
wherein the retaining element (12) is or can be mounted on the brake caliper (4) in such a way, in particular by means of its primary retaining region (14) and its secondary retaining region (16), that insertion or removal of brake pads (8) from or into the insertion opening (6) of the brake caliper (4) is prevented by the retaining element (12) in a form-fitting manner.

8. Brake caliper arrangement (2) according to claim 6 or 7,
wherein the brake caliper arrangement (2) comprises two brake pads (8).

9. Brake caliper arrangement (2) according to claim 8,
wherein the sensor element (50) is arranged on the side of the retaining element (12) facing the brake pads (8).

10. Brake caliper arrangement (2) according to claim 8 or 9,
wherein the brake caliper arrangement (2) has a wear sensor,
wherein the wear sensor measures or can detect a state of wear of the brake pads (8).

11. Brake caliper arrangement (2) according to claim 10,
wherein the wear sensor is arranged directly or indirectly on the brake pad (8).

12. Brake caliper arrangement (2) according to claim 10 or 11,
wherein the wear sensor is connected to a cable,
wherein the cable is attached to the retaining element (12).

13. Brake caliper arrangement (2) according to any one of claims 6 to 12,
wherein the sensor element (50) is a brake pad temperature measuring element and/or a brake disk temperature measuring element.

14. Disk brake (1) comprising a brake caliper arrangement (2) according to any one of claims 6 to 13 and a brake disk (20).

15. Disc brake monitoring system comprising a disk brake according to claim 14 and an evaluation unit,
wherein the evaluation unit outputs and/or displays a warning
if the temperature of the brake disk and/or the brake pads is below an expected temperature and/or above an expected temperature.

## Revendications

1. Ensemble de maintien de plaquette de frein (10) pour un ensemble d'étrier de frein (2), en particulier pour un ensemble d'étrier de frein de véhicule utilitaire, comprenant un élément de maintien (12) et un élément capteur (50),
l'élément de maintien (12) s'étendant dans une direction longitudinale (L) et étant conçu pour maintenir directement ou indirectement une plaquette de frein (8) par complémentarité de formes et pour la bloquer par complémentarité de formes afin de l'empêcher de sortir d'un étrier de frein (4),
l'élément capteur (50) étant immobilisé directement sur l'élément de maintien (12),
**caractérisé en ce que** l'élément capteur (50) est un capteur de mesure de température.

2. Ensemble de maintien de plaquette de frein (10) selon la revendication 1, dans lequel l'élément de maintien (12) présente une zone de maintien primaire (14) et une zone de maintien secondaire (16),
la zone de maintien primaire (14) et la zone de maintien secondaire (16) sont conçues pour soutenir l'élément de maintien (12) par rapport à un étrier de frein (4) ou à un ensemble d'étrier de frein (2), et
l'élément capteur (50) est disposé, en particulier dans la direction longitudinale (L), entre la zone de maintien primaire (14) et la zone de maintien secondaire (16).

3. Ensemble de maintien de plaquette de frein (10) selon l'une des revendications précédentes,
dans lequel l'élément de maintien (12) est un arceau de maintien de plaquette.

4. Ensemble de maintien de plaquette de frein (10) selon l'une des revendications précédentes,
dans lequel l'élément capteur (50) est un capteur sans contact physique.

5. Ensemble de maintien de plaquette de frein (10) selon l'une des revendications précédentes,
dans lequel l'élément capteur (50) est relié à un ensemble de câble (52),
l'ensemble de câble (52) étant en particulier fixé à l'élément de maintien (12), de préférence au moyen de pinces.

6. Ensemble d'étrier de frein (2) comprenant un étrier de frein (4) et un ensemble de maintien de plaquette de frein (10) selon l'une des revendications précédentes.

7. Ensemble d'étrier de frein (2) selon la revendication 6,
dans lequel l'étrier de frein (4) présente une ouverture d'insertion (6) pour insérer des plaquettes de frein (8),
l'élément de maintien (12) est monté ou peut être monté sur l'étrier de frein (4), en particulier au moyen de sa zone de maintien primaire (14) et de sa zone de maintien secondaire (16), de telle sorte qu'une insertion ou une extraction de plaquettes de frein (8) dans ou hors de l'ouverture d'insertion (6) de l'étrier de frein (4) est empêchée par l'élément de maintien (12) par complémentarité de formes.

8. Ensemble d'étrier de frein (2) selon la revendication 6 ou 7,
dans lequel l'ensemble d'étrier de frein (2) comprend deux plaquettes de frein (8).

9. Ensemble d'étrier de frein (2) selon la revendication 8,
dans lequel l'élément capteur (50) est disposé sur le côté de l'élément de maintien (12) tourné vers les plaquettes de frein (8).

10. Ensemble d'étrier de frein (2) selon la revendication 8 ou 9,
dans lequel l'ensemble d'étrier de frein (2) comprend un capteur d'usure,
le capteur d'usure mesure ou peut détecter un état d'usure des plaquettes de frein (8).

11. Ensemble d'étrier de frein (2) selon la revendication 10,
dans lequel le capteur d'usure est disposé indirectement ou directement sur la plaquette de frein (8).

12. Ensemble d'étrier de frein (2) selon la revendication 10 ou 11,
dans lequel le capteur d'usure est relié à un câble,
le câble est fixé à l'élément de maintien (12).

13. Ensemble d'étrier de frein (2) selon l'une des revendications 6 à 12, dans lequel l'élément capteur (50) est un élément de mesure de la température de la plaquette de frein et/ou un élément de mesure de la température du disque de frein.

14. Frein à disque (1) comprenant un ensemble d'étrier de frein (2) selon l'une des revendications 6 à 13 et un disque de frein (20).

15. Système de surveillance de frein à disque, comprenant un frein à disque selon la revendication 14 et une unité d'évaluation,
dans lequel l'unité d'évaluation émet et/ou affiche un avertissement lorsque la température du disque de frein et/ou des plaquettes de frein est inférieure à une température attendue et/ou est supérieure à une température attendue.
